# EUROPEAN PATENT SPECIFICATION

(11) **EP 4 001 848 B1**
(45) Date of publication and mention of the grant of the patent: **03.01.2024**
(21) Application number: 21205950.5
(22) Date of filing: 02.11.2021
(51) Int. Cl.: G01C 23/00

(54) **SYSTEMS AND METHODS FOR PROVIDING LOCATION INFORMATION FOR A USER-SELECTED FEATURE ON AN ACTIVE VERTICAL SITUATION DISPLAY (VSD)**
SYSTEME UND VERFAHREN ZUR BEREITSTELLUNG VON STANDORTINFORMATIONEN FÜR EIN BENUTZERAUSGEWÄHLTES MERKMAL AUF EINER AKTIVEN VERTIKALEN SITUATIONSANZEIGE (VSD)
SYSTÈMES ET PROCÉDÉS DE FOURNITURE D'INFORMATIONS DE LOCALISATION POUR UNE FONCTION SÉLECTIONNÉE PAR L'UTILISATEUR SUR UN AFFICHAGE SITUATIONNEL VERTICAL (VSD) ACTIF

(30) Priority: 11.11.2020 IN 202011049226; 30.12.2020 US 202017138311
(43) Date of publication of application: 25.05.2022
(73) Proprietor: Honeywell International Inc., Charlotte, NC 28202 (US)
(72) Inventor: SAMUTHIRAPANDIAN, Subash, Charlotte, 28202 (US); WYATT, Ivan, Charlotte, 28202 (US)
(74) Representative: LKGlobal UK Ltd.

(56) References cited:
- US-A1- 2006 005 147
- US-A1- 2010 073 359
- US-A1- 2018 074 167
- US-A1- 2019 279 514
- US-B1- 7 109 913

## Description

### CROSS REFERENCE TO RELATED APPLICATION

This application claims priority to Indian Provisional Patent Application No. 202011049226, filed November 11, 2020.

### TECHNICAL FIELD

The following disclosure relates generally to aircraft display systems, and, more particularly, to systems and methods for providing location information for a user-selected feature on an active vertical situation display (VSD).

### BACKGROUND

A Vertical Situation Display (VSD) on a cockpit provides a vertical profile of terrain, weather and a flight path trajectory if an aircraft follows the flight plan. If the aircraft doesn't follow the flight plan, the VSD can provide an along aircraft track angle for guidance.

Available implementations of VSDs provide a broad vertical view of weather, terrain and flight plan awareness. However, a technical problem is presented when a pilot wants to have additional detailed information, such as specific altitude, angle and distance measurements for a user-selected feature within a cluster or plurality of weather and terrain features on a VSD.

Accordingly, there is a need for flight display systems and methods for providing location information for a user-selected feature on an active vertical situation display (VSD). Furthermore, other desirable features and characteristics of the present invention will be apparent from the subsequent detailed description and the appended claims, taken in conjunction with the accompanying drawings and the foregoing technical field and background. Documents US 2010/073359 A1 and US 2019/279514 A1 disclose flight display systems comprising a VSD wherein altitudes corresponding to a selectable point on the VSD are also displayed.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Provided is a flight display system according to claim 1 for providing location information for a user-selected feature on an active vertical situation display (VSD) provided on a display unit in a cockpit of an aircraft. The flight display system includes a controller circuit configured to: receive, from a user interface operationally coupled to the controller circuit, the user-selected feature from among a plurality of features on the active VSD, the plurality of features including terrain features and weather features; cause a reticle to be displayed as an overlay, centered, on the user-selected feature on the active VSD, responsive to receiving the user-selected feature; render a first indicator showing a horizontal extension from a center of the reticle to an intersection on a vertical axis of the active VSD; render a second indicator showing a vertical extension from the center of the reticle to an intersection on a horizontal axis of the active VSD; reference map layer data using the center of the reticle to obtain raw geospatial information for the user-selected feature; convert the raw geospatial information for the user-selected feature to an elevation and a distance consistent with a current scale of the active VSD; position an alphanumeric elevation label indicating the elevation along the first indicator; and position an alphanumeric distance label indicating the distance by the second indicator.

Also provided is a processor-implemented method according to claim 6 for providing location information for a user-selected feature on an active vertical situation display (VSD) provided on a display unit in a cockpit of an aircraft. The method includes: rendering the active vertical situation display (VSD) having a plurality of features as a function of received aircraft state data, terrain data, and weather data; receiving, from a user interface, at a controller circuit, the user-selected feature from among the plurality of features on the active VSD, the plurality of features including terrain features and weather features; causing a reticle to be displayed as an overlay, centered, on the user-selected feature on the active VSD, responsive to receiving the user-selected feature; rendering a first indicator showing a horizontal extension from a center of the reticle to an intersection on a vertical axis of the active VSD; rendering a second indicator showing a vertical extension from the center of the reticle to an intersection on a horizontal axis of the active VSD; referencing map layer data using the center of the reticle to obtain raw geospatial information for the user-selected feature; converting the raw geospatial information for the user-selected feature to an elevation and a distance consistent with a current scale of the active VSD; positioning an alphanumeric elevation label indicating the elevation along the first indicator; and positioning an alphanumeric distance label indicating the distance by the second indicator.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

At least one example of the present invention will hereinafter be described in conjunction with the following figures, wherein like numerals denote like elements, and:

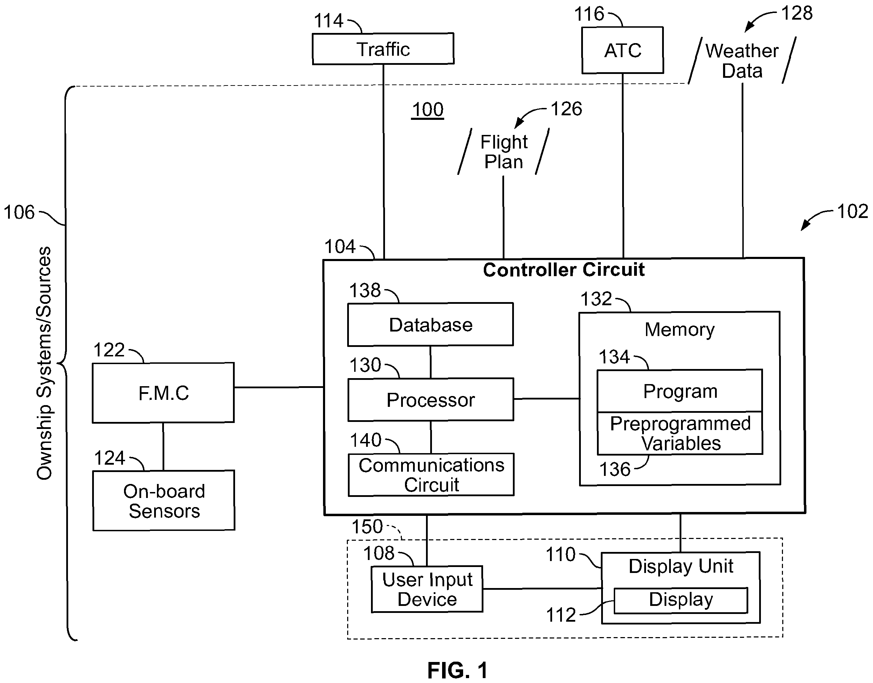

FIG. 1 is a block diagram of a flight display system for providing location information for a user-selected feature on an active vertical situation display (VSD) provided on a display device in a cockpit of an aircraft, as illustrated in accordance with an exemplary embodiment of the present disclosure;

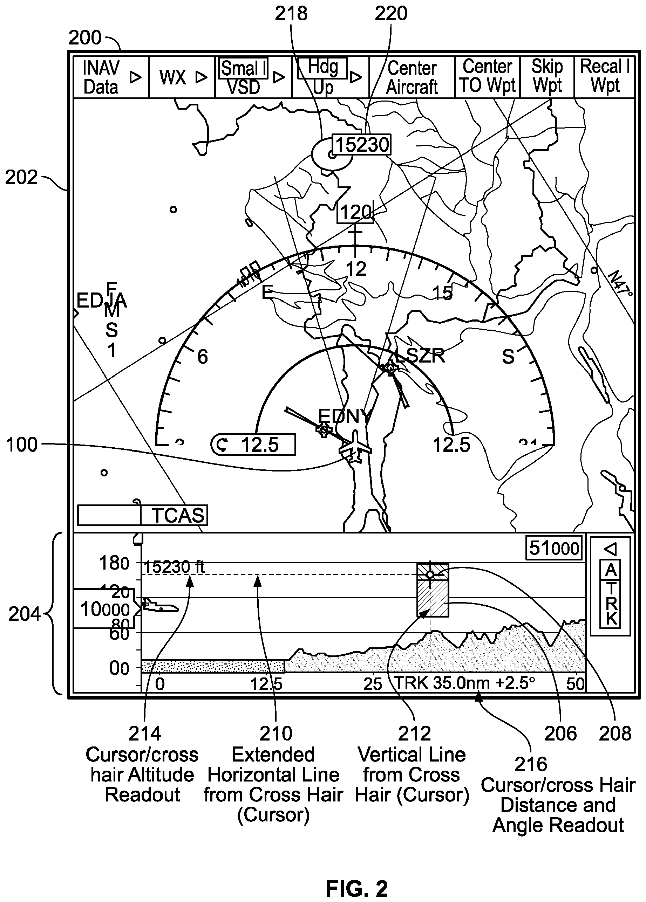

FIGS. 2-3 are illustrations of location information displayed on a display unit, as illustrated in accordance with an exemplary embodiment of the present disclosure; and

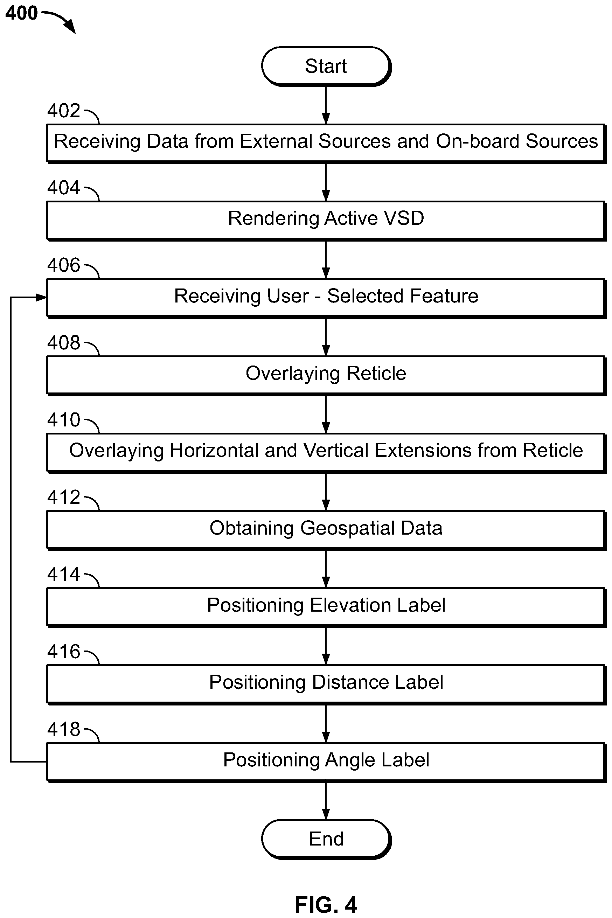

FIG. 4 is a flow chart of a method for providing location information for a user-selected feature on an active vertical situation display (VSD) provided on a display device in a cockpit of an aircraft, as may be implemented by the system of FIG. 1, in accordance with an exemplary embodiment of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

As mentioned, available implementations of VSDs provide a broad vertical view of weather, terrain and flight plan awareness, but a technical problem is presented when a pilot wants to have additional detailed information, such as specific altitude, angle and distance measurements for a single feature within a cluster or plurality of weather and terrain features.

Being able to know an altitude and distance for a single weather feature enables a pilot for better strategic situational awareness and strategic flight planning. For example, when an aircraft is in an en-route phase of flight and severe weather is indicated on a VSD, understanding the vertical extension of the severe weather is important for pilot. Having access to more detailed information may enable the pilot to see an opportunity to avoid the severe weather element by flying below or above it.

Similarly, being able to know an elevation and distance for a single terrain feature enables a pilot for better strategic situational awareness and strategic flight planning. For example, when a terrain peak is displayed on a VSD, understanding the terrain elevation and its specific angle from the aircraft's track is important to avoid it.

The present disclosure provides a technical solution, in the form of flight display systems and methods for providing location information for a user-selected feature on an active vertical situation display (VSD) provided on a display device in a cockpit of an aircraft. The flight display system may be onboard the aircraft of part of an electronic flight bag (EFB) or another portable electronic device.

The present disclosure provides an added level of specificity for the user selection, with a reticle. An advantage to using a reticle, such as a crosshair design, is a reduction in the ambiguity of available solutions, in which a distance to the cursor is dependent on a mode. In the provided embodiments using the reticle, the distance from the aircraft to the user-selected feature located at the geometric center of the reticle is displayed along the range scale (i.e., the X axis, or horizontal axis, of the VSD) so the measurement is readily apparent.

FIG. 1 is a block diagram of a flight display system for providing location information for a user-selected feature on an active vertical situation display (VSD) provided on a display device in a cockpit of an aircraft (shortened hereinafter to "system **102"**), as illustrated in accordance with an exemplary and non-limiting embodiment of the present disclosure. The system **102** may be utilized onboard a mobile platform **100** to provide feasible target traffic for a paired approach for the aircraft, as described herein. In various embodiments, the mobile platform is an aircraft **100,** which carries or is equipped with the system **102.** As schematically depicted in FIG. 1, system **102** may include the following components or subsystems, each of which may assume the form of a single device, system on chip (SOC), or multiple interconnected devices: a controller circuit **104** operationally coupled to: at least one display unit **110;** a user input device **108;** and ownship systems/data sources **106.** In various embodiments, the system **102** may be separate from or integrated within: an FMS computer and/or a flight control system (FCS). The system **102** may also contain a communications circuit **140** with an antenna, configured to wirelessly transmit data to and receive real-time data and signals from various external sources. In various embodiments, the external sources include traffic **114** for providing traffic data, air traffic control (ATC **116**) and a weather forecasting source that provides weather data **128.** These functional blocks are described in more detail below.

Although schematically illustrated in FIG. 1 as a single unit, the individual elements and components of the system **102** can be implemented in a distributed manner utilizing any practical number of physically distinct and operatively interconnected pieces of hardware or equipment. When the system **102** is utilized as described herein, the various components of the system **102** will typically all be located onboard the Aircraft **100.**

The term "controller circuit," as appearing herein, broadly encompasses those components utilized to carry-out or otherwise perform the processes and/or support the processing functionalities of the system **102.** Accordingly, controller circuit **104** can encompass or may be associated with a programmable logic array, and an application specific integrated circuit or other similar firmware, as well as any number of individual processors, flight control computers, navigational equipment pieces, computer-readable memories (including or in addition to memory **132**), power supplies, storage devices, interface cards, and other standardized components. In various embodiments, as shown in FIG. 1, the controller circuit **104** may embody one or more processors operationally coupled to data storage having stored therein at least one firmware or software program (generally, a program product or program of computer-readable instructions that embody an algorithm) for carrying-out the various process tasks, calculations, and control/display functions described herein. During operation, the controller circuit **104** may execute an algorithm for providing location information for a user-selected feature on an active vertical situation display (VSD), and thereby perform the various process steps, tasks, calculations, and control/display functions described herein. In various embodiments, the algorithm is embodied as at least one firmware or software program (e.g., program **134**).

Communications circuit **140** is configured to provide a real-time bidirectional wired and/or wireless data exchange for the processor **130** with the ownship data sources **106,** the user input device **108,** the display unit **110,** and the external sources to support operation of the system **102** in embodiments. In various embodiments, the communications circuit **140** may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit **140** is integrated within the controller circuit **104** as shown in FIG. 1, and in other embodiments, the communications circuit **140** is external to the controller circuit **104.**

A variety of ownship data sources **106** and systems may be operationally coupled to the controller circuit **104.** In various embodiments, the ownship data sources **106** includes a flight management controller FMC **122** and on-board sensors **124.** In various embodiments, a flight plan (FP **126**) may be provided by a flight management system (FMS). On-board sensors **124** include flight parameter sensors and geospatial sensors and supply various types of aircraft state data or measurements to controller circuit **104** during aircraft operation. In various embodiments, the aircraft state data (supplied by the on-board sensors **124**) include, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data. In various embodiments, the aircraft state data (supplied by the on-board sensors **124**) additionally includes on-board sensed weather data associated with the immediate surroundings of the aircraft **100.**

External sources may include one or more other aircraft (also referred to as neighbor traffic, or simply, traffic **114**), a ground station and/or air traffic control (ATC) **116,** and a source of weather data **128.** With respect to the present invention, weather data **128** includes meteorological weather information and may be provided by any one or more weather data sources, such as, uplink weather (XM/SXM, GDC/GoDirect Weather), NOTAM/D-NOTAM, TAF, and D-ATIS.

Each traffic **114** of a plurality of traffic **114** encodes and transmits its own state parameters and other identifying information to the aircraft **100** using a traffic communication protocol, such as automatic dependent surveillance broadcast (ADS-B). In various embodiments, controller circuit **104** receives the data from the plurality of traffic **114** and decodes it using the same communication protocol to thereby associate each neighbor traffic **114** with its respective state parameters.

On-board the aircraft **100,** a flight management controller (FMC **122**) may generate commands, such as speed commands, for an autopilot system. In various embodiments, the controller circuit **104** generates commands for the FMC **122.**

In various embodiments, the system **102** may employ one or more database(s) **138;** they may be integrated with memory **132** or separate from it. For example, a database **138** may be a source of map layer data that is referenced by the controller circuit **104.** Map layer data includes raw geospatial information that locates, in two- or three-dimensions, airport features; geographical (terrain) features; buildings, bridges, and other structures; and maps of streets. In various embodiments, map layer data includes what is referred to as a navigational database. Map layer data may be updated on a periodic or iterative basis to ensure data timeliness. This map layer data may be uploaded into the database **138** at an initialization step and then periodically updated, as directed by either a program **134** update or by an externally triggered update.

In various embodiments, aircraft-specific parameters and information for aircraft **100** may be stored in the database **138** and referenced by the program **134.** Non-limiting examples of aircraft-specific information includes an aircraft weight and dimensions, performance capabilities, configuration options, and the like.

During operation, the system **102** can generate various types of lateral and vertical avionic displays **112** on the display unit **110,** on which map views and symbology, text annunciations, and other graphics pertaining to flight planning are presented for a pilot to view. As used herein, the term "avionic display" is synonymous with the term "aircraft-related display" and "cockpit display" and encompasses displays generated in textual, graphical, cartographical, and other formats.

Accordingly, the display unit **110** can include any number and type of image generating devices on which one or more avionic displays **112** may be produced. In various embodiments, the display unit **110** is configured to continuously render at least a vertical situation display (VSD). In various embodiments, the display unit **110** is configured to continuously render a VSD and a lateral display showing the Aircraft **100** at its current location, based on aircraft state data and the map layer data.

Specifically, embodiments of avionic displays **112** include one or more two dimensional (2D) avionic displays, such as a horizontal (i.e., lateral) navigation display or vertical situation display; and/or on one or more three dimensional (3D) avionic displays, such as a Primary Flight Display (PFD) or an exocentric 3D avionic display. When the system **102** is utilized for a manned Aircraft, display unit **110** may be affixed to the static structure of the Aircraft cockpit as, for example, a Head Down Display (HDD) or Head Up Display (HUD) unit. Alternatively, display unit **110** may assume the form of a movable display device (e.g., a pilot-worn display device) or a portable display device, such as an Electronic Flight Bag (EFB), a laptop, or a tablet computer carried into the Aircraft cockpit by a pilot. In various embodiments, the avionic display **112** generated and controlled by the system **102** can include a user input interface, including graphical user interface (GUI) objects and alphanumeric displays of the type commonly presented on the screens of MCDUs, as well as Control Display Units (CDUs) generally.

In various embodiments, a user interface (also referred to as a human-machine interface **150**) is implemented as an integration of a user input device **108** and a display unit **110,** such as, when the display unit **110** includes a touch screen display. In various embodiments, the user interface/human-machine interface **150** includes one or more additional user input devices **108** (such as a keyboard, cursor control device, voice input device, or the like), generally operationally coupled to the display unit **110.** Via various display and graphics systems processes, the system **102** may command and control a touch screen display unit **110** to generate, on the human-machine interface **150,** a variety of graphical user interface (GUI) objects or elements described herein, including, for example, buttons, sliders, and the like, which are used to prompt a user to interact with the human-machine interface **150** to provide user input; and for the system **102** to activate respective functions and provide user feedback, responsive to received user input at the GUI element.

With continued reference to FIG. 1, in various embodiments, the controller circuit **104** may take the form of an enhanced computer processer and include a processor **130** and a memory **132.** Memory **132** is a data storage that can encompass any number and type of storage media suitable for storing computer-readable code or instructions, such as the aforementioned software program **134,** as well as other data generally supporting the operation of the system **102.** Memory **132** may also store one or more preprogrammed variables **136** and thresholds, for use by an algorithm embodied in the software program **134.** Examples of preprogrammed variables **136** include preprogrammed or prescribed amounts of time and distances.

Turning now to FIGS. 2-3, and with continued reference to FIG. 1, the operation of the system **102** is described. Examples in FIGS. 2-3 illustrate providing location information for a user-selected feature on an active vertical situation display (VSD) by the system **102.**

Avionic display **200** includes a lateral display **202** and a vertical situation display (VSD) 204. Aircraft **100** is shown on the lateral display **202** and on the VSD **204.** The lateral display **202** and VSD **204** are described as active, in that they render an image showing the aircraft **100** at its current location as a function of aircraft state data, map layer data, and weather data.

In the VSD **204,** an area **206** is rendered in a visually distinguishable manner to depict a weather event. The visually distinguished area **206** is shown as a rectangle, but in various scenarios it can be a plurality of different shapes and may be amorphous. The visually distinguished area **206** may have multiple shades of one color, or may have multiple colors, as determined by the graphics capacity of the display unit **110.** The area **206** is understood to depict a vertical extent of the weather event, along a slice of a horizontal plane. On the lateral display **202,** the weather event is also depicted with its lateral extent, as object **218.** The pilot may be interested in querying the weather event to find out more specific details as it relates to a current track of the aircraft **100.** For example, the pilot may be interested in selecting a single element (or point) in the weather event and finding out, for that point, an altitude, a distance and an angle associated therewith. By enabling the pilot to query the weather event point by point, the pilot is enabled to make more informed decisions and to exercise more options for avoiding severe weather along the pilot's track. For example, the pilot is enabled to avoid the severe weather event by flying above or below it.

At the user interface **150,** the user selects a feature from among a plurality of features on the active VSD, the plurality of features including terrain features and weather features. In this example, the user has selected the weather event area **206.** In an embodiment, the user selection is performed by moving a cursor over the feature and then indicating the selection to the system by clicking or entering the position. In an embodiment, the user selection is performed by moving a cursor over the feature, without a second step of clicking or entering the position.

In an embodiment, the system **102** causes a reticle **208** to be displayed as an overlay, centered, on the user-selected feature on the active VSD, responsive to receiving the user-selected feature. In an embodiment, the reticle **208** comprises a cross hair. Regardless of the embodiment of the reticle **208,** and regardless of whether it is visually depicted, the reticle has a geometric center. The system **102** determines the geometric center of the reticle **208.** The system **102** renders a first indicator **210** showing a horizontal extension from the center of the reticle **208** to an intersection on a vertical axis of the active VSD **204.** The system **102** also renders a second indicator **212** showing a vertical extension from the center of the reticle **208** to an intersection on a horizontal axis of the active VSD **204.** In this manner, the reticle or cross hair is extended horizontally and vertically on the active VSD **204,** to thereby obtain an altitude and distance from the aircraft's current location.

The system **102** references map layer data using the center of the reticle **208** to obtain raw geospatial information for the user-selected feature. In this manner, the system **102** queries the map layer data and weather data to find out what is located at this altitude and distance. The system **102** converts the raw geospatial information for the user-selected feature to an elevation (15, 230 feet in the example) and a distance (35 nautical miles in the example) consistent with a current scale of the active VSD. The system **102** positions an alphanumeric elevation label **214** (also referred to as an altitude label, as appropriate for the user-selected feature) along the first indicator **210.** The system **102** positions an alphanumeric distance label **216** by the second indicator **212.**

In various embodiments, the system **102** also converts the raw geospatial information for the user-selected feature to a vertical angle measured between a horizontal line through an aircraft center of mass in a direction of the aircraft heading and a line from the aircraft center of mass to the center of the reticle. And, the system **102** enhances the alphanumeric distance label **216** with an alphanumeric label for the angle (positive 2.5 degrees in the example) to show that the user-selected feature is not directly on track but is at a vertical angle away at the depicted distance. In various embodiments, the vertical angle is measured between a horizontal line through an aircraft **100** center of mass and a line from the aircraft **100** center of mass to the center of the reticle.

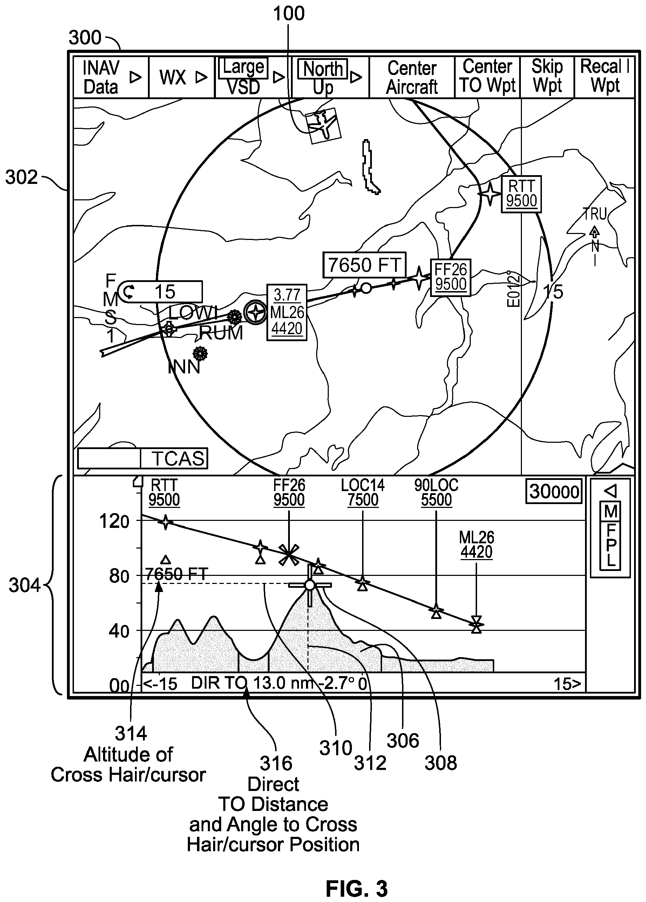

FIG. 3 depicts a user-selected terrain feature. Avionic display **300** includes a lateral display **302** and a vertical situation display (VSD) 304. Aircraft **100** is shown on the lateral display **302.** The lateral display **302** and VSD **304** are described as active, in that they render an image showing the aircraft **100** at its current location as a function of aircraft state data, map layer data, and weather data.

In the VSD **304,** an area is rendered in a visually distinguishable manner to depict a mountain **306.** At the user interface **150,** the user selects a feature from among a plurality of features on the active VSD, the plurality of features including terrain features and weather features. In this example, the user has selected the peak of the mountain **306.** The system **102** causes a reticle **208** to be displayed as an overlay, centered, on the user-selected feature (mountain **306** peak) on the active VSD **304.**

The system **102** determines the geometric center of the reticle **308.** The system **102** references map layer data using the center of the reticle **208** to obtain raw geospatial information for the user-selected feature. The system **102** renders a first indicator **310** showing a horizontal extension from the center of the reticle **308** to an intersection on a vertical axis of the active VSD **304.** The system **102** also renders a second indicator **312** showing a vertical extension from the center of the reticle **308** to an intersection on a horizontal axis of the active VSD **304.** In this manner, the reticle or cross hair is extended horizontally and vertically on the active VSD **304,** to thereby obtain an elevation (7650 feet, in this example) and distance (13 nautical miles in this example) from the aircraft's 100 current location.

In various embodiments, in addition to rendering geospatial information on the VSD, the altitude or elevation may be rendered alphanumerically on the lateral display. For example, in FIG. 2, "15,230" is rendered alongside the weather event object **218,** and in FIG. 3, "7650 ft" is rendered alongside a dot marking the user-selected peak of mountain, at reticle **308.**

Turning now to FIG. 4, the system **102** described above may be implemented by a processor-executable method **400.** For illustrative purposes, the following description of method **400** may refer to elements and modules mentioned above in connection with FIGS. 1-5. In practice, portions of method **400** may be performed by different components of the described system. It should be appreciated that method **400** may include any number of additional or alternative tasks, the tasks shown in FIG. 4 need not be performed in the illustrated order, and method **400** may be incorporated into a more comprehensive procedure or method having additional functionality not described in detail herein. Moreover, one or more of the tasks shown in FIG. 4 could be omitted from an embodiment of the method **400** as long as the intended overall functionality remains intact.

At **402,** the system **102** has already been initialized. Initialization may include loading instructions and program **134** into a processor within the controller circuit **104,** as well as loading preprogrammed variables **136,** map data, weight class specifications, and aircraft-specific features into one or more database(s) **138.**

At **402** the system **102** may gather or receive data from external sources, such as weather data, and ATC, and ownship data sources **106.** At **404,** the active vertical situation display (VSD) having a plurality of features as a function of received aircraft state data, terrain data, and weather data may be rendered. At **406,** the system **102** may receive, from a user interface **150,** at a controller circuit **104,** the user-selected feature from among the plurality of features on the active VSD, the plurality of features including terrain features and weather features. At **408,** the system **102** may cause a reticle to be displayed as an overlay, centered, on the user-selected feature on the active VSD, responsive to receiving the user-selected feature. At **410,** the system **102** may render a first indicator showing a horizontal extension from a center of the reticle to an intersection on a vertical axis of the active VSD; and, a second indicator showing a vertical extension from the center of the reticle to an intersection on a horizontal axis of the active VSD.

At **412,** the system **102** may perform the step of referencing map layer data using the center of the reticle to obtain raw geospatial information for the user-selected feature. At **414,** the system **102** may perform the step of converting the raw geospatial information for the user-selected feature to an elevation and a distance consistent with a current scale of the active VSD and position an alphanumeric elevation label along the first indicator. At **416,** the system **102** may perform the step of positioning an alphanumeric distance label by the second indicator. And, at **418,** the system **102** may perform the step of enhancing the alphanumeric distance label with an alphanumeric angle label. After **418,** the method may stop or return to **406.**

Thus, enhanced systems and methods for providing location information for a user-selected feature on an active vertical situation display (VSD) provided on a display unit in a cockpit of an aircraft are provided. Embodiments provide an objectively enhanced human-machine interface using a reticle and providing detailed location information for a user-selected feature on the VSD.

Although an exemplary embodiment of the present disclosure has been described above in the context of a fully-functioning computer system (e.g., system **102** described above in conjunction with FIG. 1), those skilled in the art will recognize that the mechanisms of the present disclosure are capable of being distributed as a program product (e.g., an Internet-disseminated program or software application that includes program **134** and preprogrammed variables 136), and, further, that the present teachings apply to the program product regardless of the particular type of computer-readable media (e.g., hard drive, memory card, optical disc, etc.) employed to carry-out its distribution.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements. While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A flight display system for providing location information for a user-selected feature on an active vertical situation display (VSD) provided on a display unit in a cockpit of an aircraft, the flight display system comprising a controller circuit (104) configured to:
receive the user-selected feature from a user interface (150) operationally coupled to the controller circuit, the user-selected feature from among a plurality of features on the active VSD, the plurality of features including terrain features and weather features;
cause a reticle (208) to be displayed as an overlay, centered, on the user-selected feature on the active VSD at a current scale of the VSD, responsive to receiving the user-selected feature;
indicate a location of the user-selected feature by rendering a first indicator (210, 310) showing a horizontal extension from a center of the reticle to an intersection on a vertical axis of the active VSD, and rendering a second indicator (212, 312) showing a vertical extension from the center of the reticle to an intersection on a horizontal axis of the active VSD;
reference map layer data and weather data using the center of the reticle to obtain raw geospatial information for the user-selected feature;
convert the raw geospatial information for the user-selected feature to an elevation and a distance consistent with the current scale of the active VSD;
position an alphanumeric elevation label (214) indicating the elevation along the first indicator; and
position an alphanumeric distance label (216) indicating the distance by the second indicator.

2. The flight display system of claim 1, wherein the reticle (208) comprises a cross hairs.

3. The flight display system of claim 1, wherein the center is a geometric center of the reticle (208), and wherein the controller circuit (104) is further configured to determine the geometric center of the reticle.

4. The flight display system of claim 3, wherein the controller circuit (104) is further configured to:
determine that the user-selected feature is not directly on a track of the aircraft but is at a vertical angle away at the distance;
determine a measurement of the vertical angle; and
enhance the alphanumeric distance label (216) with an alphanumeric label for the measurement of the vertical angle.

5. The flight display system of claim 1, wherein the controller circuit (104) detects the user-selected feature when a user moves a cursor over the user-selected feature, without further user input.

6. A processor-implemented method for providing location information for user-selected terrain features and user-selected weather features on an active vertical situation display (VSD) provided on a display unit in a cockpit of an aircraft, the method comprising:
rendering the active vertical situation display (VSD) having a plurality of features as a function of received aircraft state data, terrain data, and weather data, the active VSD having a current scale;
receiving, from a user interface, at a controller circuit (104), a user selection of a terrain feature or a weather feature from among the plurality of features on the active VSD;
causing a reticle (208) to be displayed as an overlay, centered, on the user-selected terrain feature or weather feature on the active VSD, consistent with the current scale, responsive to receiving the user-selected feature;
indicating a location of the respective terrain feature or weather feature that is consistent with the current scale by rendering a first indicator (210, 310) showing a horizontal extension from a center of the reticle to an intersection on a vertical axis of the active VSD, and rendering a second indicator (212, 312) showing a vertical extension from the center of the reticle to an intersection on a horizontal axis of the active VSD;
referencing map layer data using the center of the reticle to obtain raw geospatial information for the user-selected feature;
converting the raw geospatial information for the user-selected feature to an elevation and a distance consistent with a current scale of the active VSD;
positioning an alphanumeric elevation label (214) indicating the elevation along the first indicator; and
positioning an alphanumeric distance label (216) indicating the distance by the second indicator.

7. The method of claim 6, further comprising:
determining that the user selection is not directly on a track of the aircraft but is at a vertical angle away at the distance;
determining a measurement of the vertical angle; and
enhancing the alphanumeric distance label (216) with an alphanumeric label for the measurement of the vertical angle.

8. The method of claim 6, further comprising receiving the user selection when a user moves a cursor over a terrain feature or a weather feature, without further user input.

9. The method of claim 6, wherein the center is a geometric center of the reticle (208), and further comprising determining the geometric center of the reticle.

10. The method of claim 6, wherein the reticle (208) comprises a cross hairs.

## Patentansprüche

1. Fluganzeigesystem zur Bereitstellung von Ortsdaten für eine benutzerselektierte Funktion auf einer aktiven vertikalen Situationsanzeige (VSD), die auf einer Anzeigeeinheit in einem Cockpit eines Flugzeugs bereitgestellt wird, wobei das Fluganzeigesystem einen Steuerschaltkreis (104) umfasst, der zu Folgendem konfiguriert ist:
Empfangen der benutzerselektierten Funktion von einer Benutzerschnittstelle (150), die betriebsfähig mit dem Steuerschaltkreis gekoppelt ist, aus einer Vielzahl von Funktionen auf der aktiven VSD, wobei die Vielzahl von Funktionen Geländefunktionen und Wetterfunktionen beinhaltet;
Veranlassen, dass ein Fadenkreuz (208) als Überlagerung zentriert auf der benutzerselektierten Funktion auf der aktiven VSD in einem aktuellen Maßstab der VSD angezeigt wird, als Reaktion auf den Empfang der benutzerselektierten Funktion;
Anzeigen eines Ortes der benutzerselektierten Funktion durch Wiedergeben eines ersten Indikators (210, 310), der eine horizontale Ausdehnung von einem Mittelpunkt des Fadenkreuzes zu einem Schnittpunkt auf einer vertikalen Achse der aktiven VSD zeigt, und Wiedergeben eines zweiten Indikators (212, 312), der eine vertikale Ausdehnung vom Mittelpunkt des Fadenkreuzes zu einem Schnittpunkt auf einer horizontalen Achse der aktiven VSD zeigt;
Verweisen auf Kartenebenendaten und Wetterdaten unter Verwendung des Mittelpunkts des Fadenkreuzes, um raumbezogene Rohdaten für die benutzerselektierte Funktion zu erhalten;
Umwandeln der raumbezogenen Rohdaten für die benutzerselektierte Funktion in eine Höhe und eine Distanz, entsprechend dem aktuellen Maßstab der aktiven VSD;
Positionieren einer alphanumerischen Höhenmarkierung (214), die die Höhe gemäß dem ersten Indikator anzeigt; und
Positionieren einer alphanumerischen Distanzmarkierung (216), die die Distanz durch den zweiten Indikator anzeigt.

2. Fluganzeigesystem gemäß Anspruch 1, wobei das Fadenkreuz (208) eine Fadenkreuzlinie umfasst.

3. Fluganzeigesystem gemäß Anspruch 1, wobei der Mittelpunkt ein geometrischer Mittelpunkt des Fadenkreuzes (208) ist und wobei der Steuerschaltkreis (104) ferner dazu konfiguriert ist, den geometrischem Mittelpunkt des Fadenkreuzes festzulegen.

4. Fluganzeigesystem gemäß Anspruch 3, wobei der Steuerschaltkreis (104) zu Folgendem konfiguriert ist:
Festlegen, dass die benutzerselektierte Funktion nicht direkt auf einem Kurs des Flugzeugs, sondern in einem vertikalen Winkel in der Distanz liegt;
Festlegen einer Messung des vertikalen Winkels; und
Verbessern der alphanumerischen Distanzmarkierung (216) mit einer alphanumerischen Markierung für die Messung des vertikalen Winkels.

5. Fluganzeigesystem gemäß Anspruch 1, wobei der Steuerschaltkreis (104) die benutzerselektierte Funktion erkennt, wenn ein Benutzer einen Cursor über die benutzerselektierte Funktion bewegt, ohne eine weitere Eingabe durch den Benutzer.

6. Prozessor-implementiertes Verfahren zur Bereitstellung von Ortsdaten für benutzerselektierte Geländefunktionen und benutzerselektierte Wetterfunktionen auf einer aktiven vertikalen Situationsanzeige (VSD), die auf einer Anzeigeeinheit in einem Cockpit eines Flugzeugs bereitgestellt wird, das Verfahren umfassend:
Wiedergeben der aktiven vertikalen Situationsanzeige (VSD), die eine Vielzahl von Funktionen aufweist, als eine Funktion von empfangenen Flugzeugzustandsdaten, Geländedaten und Wetterdaten, wobei die aktive VSD einen aktuellen Maßstab aufweist;
Empfangen von einer Benutzerschnittstelle an einem Steuerschaltkreis (104) einer Benutzerauswahl einer Geländefunktion oder einer Wetterfunktion aus der Vielzahl von Funktionen auf der aktiven VSD;
Veranlassen, dass ein Fadenkreuz (208) als eine Überlagerung mittig auf der benutzerselektierten Geländefunktion oder Wetterfunktion auf der aktiven VSD entsprechend dem aktuellen Maßstab angezeigt wird, als Reaktion auf den Empfang der benutzerselektierten Funktion;
Anzeigen eines Ortes der jeweiligen Geländefunktion oder Wetterfunktion entsprechend dem aktuellen Maßstab durch Wiedergeben eines ersten Indikators (210, 310), der eine horizontale Ausdehnung von einem Mittelpunkt des Fadenkreuzes zu einem Schnittpunkt auf einer vertikalen Achse der aktiven VSD zeigt, und Wiedergeben eines zweiten Indikators (212, 312), der eine vertikale Ausdehnung vom Mittelpunkt des Fadenkreuzes zu einem Schnittpunkt auf einer horizontalen Achse der aktiven VSD zeigt;
Verweisen auf Kartenebenendaten unter Verwendung des Mittelpunkts des Fadenkreuzes, um raumbezogene Rohdaten für die benutzerselektierte Funktion zu erfassen;
Umwandeln der raumbezogenen Rohdaten für die benutzerselektierte Funktion in eine Höhe und eine Distanz, entsprechend einem aktuellen Maßstab der aktiven VSD;
Positionieren einer alphanumerischen Höhenmarkierung (214), die die Höhe gemäß dem ersten Indikator anzeigt; und
Positionieren einer alphanumerischen Distanzmarkierung (216), die die Distanz durch den zweiten Indikator anzeigt; und

7. Verfahren gemäß Anspruch 6, ferner umfassend:
Festlegen, dass die Benutzerauswahl nicht direkt auf einem Kurs des Flugzeugs, sondern in einem vertikalen Winkel in der Distanz liegt;
Festlegen einer Messung des vertikalen Winkels; und
Verbessern der alphanumerischen Distanzmarkierung (216) mit einer alphanumerischen Markierung für die Messung des vertikalen Winkels.

8. Verfahren aus Anspruch 6, ferner umfassend das Empfangen der Benutzerauswahl, wenn ein Benutzer einen Cursor über eine Geländefunktion oder eine Wetterfunktion bewegt, ohne eine weitere Eingabe durch den Benutzer.

9. Verfahren gemäß Anspruch 6, wobei der Mittelpunkt ein geometrischer Mittelpunkt des Fadenkreuzes (208) ist, und ferner umfassend das Festlegen des geometrischen Mittelpunkts des Fadenkreuzes.

10. Verfahren gemäß Anspruch 6, wobei das Fadenkreuz (208) eine Fadenkreuzlinie umfasst.

## Revendications

1. Système d'affichage de vol destiné à fournir des informations de localisation pour une caractéristique sélectionnée par un utilisateur sur une présentation de situation verticale (VSD) active prévue sur une unité d'affichage dans un poste de pilotage d'un aéronef, le système d'affichage de vol comprenant un circuit de commande (104) configuré pour :
recevoir la caractéristique sélectionnée par l'utilisateur à partir d'une interface utilisateur (150) couplée fonctionnellement au circuit de commande, la caractéristique étant sélectionnée par l'utilisateur parmi une pluralité de caractéristiques sur la VSD active, la pluralité de caractéristiques incluant des caractéristiques de terrain et des caractéristiques météorologiques ;
provoquer l'affichage d'un réticule (208) en superposition, centré, sur la caractéristique sélectionnée par l'utilisateur sur la VSD active à une échelle actuelle de la VSD, en réponse à la réception de la caractéristique sélectionnée par l'utilisateur ;
indiquer une localisation de la caractéristique sélectionnée par l'utilisateur par le rendu d'un premier indicateur (210, 310) montrant une extension horizontale d'un centre du réticule jusqu'à une intersection sur un axe vertical de la VSD active, et par le rendu d'un second indicateur (212, 312) montrant une extension verticale du centre du réticule jusqu'à une intersection sur un axe horizontal de la VSD active ;
référencer des données de couche cartographique et des données météorologiques en utilisant le centre du réticule pour obtenir des informations géospatiales brutes pour la caractéristique sélectionnée par l'utilisateur ;
convertir les informations géospatiales brutes pour la caractéristique sélectionnée par l'utilisateur en une élévation et une distance compatibles avec l'échelle actuelle de la VSD active ;
positionner une étiquette d'élévation alphanumérique (214) indiquant l'élévation le long du premier indicateur ; et
positionner une étiquette de distance alphanumérique (216) indiquant la distance près du second indicateur.

2. Système d'affichage de vol selon la revendication 1, dans lequel le réticule (208) comprend des fils croisés.

3. Système d'affichage de vol selon la revendication 1, dans lequel le centre est un centre géométrique du réticule (208), et dans lequel le circuit de commande (104) est en outre configuré pour déterminer le centre géométrique du réticule.

4. Système d'affichage de vol selon la revendication 3, dans lequel le circuit de commande (104) est en outre configuré pour :
déterminer que la caractéristique sélectionnée par l'utilisateur ne se trouve pas directement sur une trajectoire de l'aéronef mais se trouve à un angle vertical à une distance éloignée ;
déterminer une mesure de l'angle vertical ; et
améliorer l'étiquette de distance alphanumérique (216) avec une étiquette alphanumérique pour la mesure de l'angle vertical.

5. Système d'affichage de vol selon la revendication 1, dans lequel le circuit de commande (104) détecte la caractéristique sélectionnée par l'utilisateur lorsqu'un utilisateur déplace un curseur sur la caractéristique sélectionnée par l'utilisateur, sans autre entrée de l'utilisateur.

6. Procédé mis en oeuvre par processeur destiné à fournir des informations de localisation pour des caractéristiques de terrain sélectionnées par un utilisateur et des caractéristiques météorologiques sélectionnées par un utilisateur sur une présentation de situation verticale (VSD) active prévue sur une unité d'affichage dans un poste de pilotage d'un aéronef, le procédé comprenant :
le rendu de la présentation de situation verticale (VSD) active ayant une pluralité de caractéristiques en fonction de données d'état d'aéronef, de données de terrain et de données météorologiques reçues, la VSD active ayant une échelle actuelle ;
la réception, à partir d'une interface utilisateur, au niveau d'un circuit de commande (104), d'une sélection par un utilisateur d'une caractéristique de terrain ou d'une caractéristique météorologique parmi la pluralité de caractéristiques sur la VSD active ;
la provocation de l'affichage d'un réticule (208) en superposition, centré, sur la caractéristique de terrain sélectionnée par l'utilisateur sur la VSD active, compatible avec l'échelle actuelle, en réponse à la réception de la caractéristique sélectionnée par l'utilisateur ;
l'indication d'une localisation de la caractéristique de terrain ou de la caractéristique météorologique respective qui est compatible avec l'échelle actuelle par le rendu d'un premier indicateur (210, 310) montrant une extension horizontale d'un centre du réticule jusqu'à une intersection sur un axe vertical de la VSD active, et par le rendu d'un second indicateur (212, 312) montrant une extension verticale du centre du réticule jusqu'à une intersection sur un axe horizontal de la VSD active ;
le référencement de données de couche cartographique en utilisant le centre du réticule pour obtenir des informations géospatiales brutes pour la caractéristique sélectionnée par l'utilisateur ;
la conversion des informations géospatiales brutes pour la caractéristique sélectionnée par l'utilisateur en une élévation et une distance compatibles avec une échelle actuelle de la VSD active ;
le positionnement d'une étiquette d'élévation alphanumérique (214) indiquant l'élévation le long du premier indicateur ; et
le positionnement d'une étiquette de distance alphanumérique (216) indiquant la distance près du second indicateur.

7. Procédé selon la revendication 6, comprenant en outre :
la détermination que la sélection de l'utilisateur ne se trouve pas directement sur une trajectoire de l'aéronef mais se trouve à un angle vertical à une distance éloignée ;
la détermination d'une mesure de l'angle vertical ; et
l'amélioration de l'étiquette de distance alphanumérique (216) avec une étiquette alphanumérique pour la mesure de l'angle vertical.

8. Procédé selon la revendication 6, comprenant en outre la réception de la sélection de l'utilisateur lorsqu'un utilisateur déplace un curseur sur une caractéristique de terrain ou une caractéristique météorologique, sans autre entrée de l'utilisateur.

9. Procédé selon la revendication 6, dans lequel le centre est un centre géométrique du réticule (208), et comprenant en outre la détermination du centre géométrique du réticule.

10. Procédé selon la revendication 6, dans lequel le réticule (208) comprend des fils croisés.
